# EUROPÄISCHE PATENTSCHRIFT

(11) **EP 0 567 517 B1**
(45) Veröffentlichungstag und Bekanntmachung des Hinweises auf die Patenterteilung: **18.09.1996**
(21) Anmeldenummer: 92903094.8
(22) Anmeldetag: 16.01.1992
(51) Int. Cl.: H04J 3/07, H04L 5/22, H04L 7/00

(54) **VERFAHREN UND ANORDNUNG ZUR ÜBERTRAGUNG VON DIGITALSIGNALEN**
PROCESS AND DEVICE FOR TRANSMITTING DIGITAL SIGNALS
PROCEDE ET DISPOSITIF POUR TRANSMETTRE DES SIGNAUX NUMERIQUES

(30) Priorität: 17.01.1991 DE 4101270
(43) Veröffentlichungstag der Anmeldung: 03.11.1993
(73) Patentinhaber: SIEMENS AKTIENGESELLSCHAFT, 80333 München (DE)
(72) Erfinder: VOLEJNIK, Wilhelm, D-8029 Sauerlach (DE)
(86) Internationale Anmeldenummer: DE9200023
(87) Internationale Veröffentlichungsnummer: WO9213405

(56) Entgegenhaltungen:
- EP-A- 0 197 492
- EP-A- 0 248 551
- US-A- 4 764 941
- FREQUENZ, Band 32, Nr. 10, Oktober 1978, Berlin, Deutschland, F. K HNE, K. LANG "Positif-Null-Negativ Stopftechnik für die Multiplexübertragung plesiochroner Datensignale", Seiten 281-287,
- H. BESIER, P. HEUER, G. KETTLER "Digitale Vermittlungstechnik", 1981, Oldenburg Verlag MUnchen Wien, Seiten 137-144,

## Beschreibung

In dem Loseblattwerk "Digitale Übertragungstechnik", Kahl, R.v. Becker's Verlag, G. Schenck Heidelberg sind im Abschnitt 1.4, Seiten 8 bis 12 und 15 bis 20 Lfg. Mai 1983 und Seiten 13 bis 14 Lfg. Mai 1984 die Positiv-, die Negativ- und die Positiv- Null-Negativ-Stopftechnik beschrieben.

Um übertragene Datensignale in einem Datenkanal mit konstanter Bitrate übertragen zu können, muß die Übertragungsbitrate, an die Bitrate des Digitalsignals angepaßt werden. Das übertragene Datensignal enthält hierzu in periodischen Abständen Stopfstellen, die je nach Bedarf Bits des Digitalsignals oder Leerbits enthalten.

Enthält die Stopfstelle planmäßig Datenbits des Digitalsignals und Leerbits in dem Ausmaß, in dem die Bitrate des Digitalsignals hinter der reservierten Übertragungsbitrate zurückbleibt, wird das Einfügen der Leerbits in die Stopfstellen als Positiv-Stopfen bezeichnet.

Enthält die Stopfstelle planmäßig Leerbits und Datenbits des Digitalsignals in dem Umfang, in dem die Bitrate des Digitalsignals die der reservierten Übertragungsbitrate überschreitet, wird das Einfügen der Datenbits in die Stopfstellen als Negativ-Stopfen bezeichnet.

Stopfverfahren, die beide Stopfarten nutzen, werden als Positiv- Null-Negativ-Stopfverfahren bezeichnet.

Diese Verfahren werden auch dann angewendet, wenn Multiplexsignale einer unteren Hierarchie-Ebene zu einem gemeinsamen Multiplexsignal einer oberen Hierarchie-Ebene zusammengefaßt werden sollen.

Jeder Stopfvorgang mit einem Bit erzeugt einen Phasensprung des abgehenden (übertragenen) Ditialsignals um ein UI (Unit Interval). Positives Stopfen bewirkt ein Zurückbleiben der Phase um ein UI gegenüber dem ankommenden Digitalsignal; negatives Stopfen ein Voreilen der Phase um ein UI. Die Phasensprünge werden am Zielort (z.B. bei Rückgewinnung des übertragenen Signals aus dem Multiplexsignal) durch eine Phasenregelschleife PLL geglättet. Entsprechend ihrer Dimensionierung wirkt die Phasenregelschleife wie ein Tiefpaß mit einer Grenzfrequenz f₀. Die Zeitkonstante des Tiefpaßes ist T = 1 / (2 *π* f₀). Die Amplitude der durch Stopfen verursachten Phasensprünge (Jitter) wird durch die Phasenregelschleife stark reduziert, falls der zeitliche Abstand der Phasensprünge sehr klein gegen die Zeitkonstante T ist, d.h. falls die Häufigkeit der Stopfvorgänge sehr groß gegen die Grenzfrequenz f₀ ist.

Beim Positiv-Null-Negativ-Stopfverfahren können die zeitlichen Abstände der Phasensprünge groß gegen die Zeitkonstante T sein. In diesem Fall werden die Amplituden der Phasensprünge durch die Phasenregelschleife wenig gedämpft, die Werte des Jitters betragen nahezu ein UI.

Aus der Veröffentlichung "Jitter Analysis of Asynchronous Payload Mappings", T1×1.4/86-447, Contribution to T1 Standards Projekt-T1×1.4, 12.11.86, Seiten 9 und 10 ist weiter eine "threshold modulation" bekannt, bei der Schwellen des Phasenabstands zwischen einem sendeseitig ankommenden und einem sendeseitig abgehenden Digitalsignal variiert werden, so daß zusätzliche Stopfvorgänge entstehen. Der Jitter nimmt dabei eine höhere Frequenz an, die leichter gefiltert werden kann.

In der europäischen Patentschrift 0 248 551 A2 ist ein Verfahren zur Synchronisation asynchroner Daten (Stopfverfahren) beschrieben, das zu einer Erhöhung der Stopf- und damit der Jitterfrequenz führt. Hieraus ist auch die Verwendung von treppenförmigen Kennlinien für die Schwellwerte zum Auslösen der zusätzlichen Stopfvorgänge bekannt. Nachteilig bei diesem Verfahren sind die überflüssigen Stopfvorgänge, wenn das zu übertragene (synchrone) Signal die Sollage aufweist. Die Anordnung bedingt ebenfalls einen beträchtlichen Schaltungsaufwand.

Aus der europäsichen Patentanmeldung 0 192 492 ist ebenfalls ein Verfahren zur Erhöhung der Stopffrequenz bei einem Positiv-Null-Negativ-Stopfverfahren beschrieben.

Der im Anspruch 1 angegebenen Erfindung liegt das Problem zugrunde, die Jitterwerte beim Positiv-Null-Negativ-Stopfen weiter zu reduzieren.

Im unabhängigen Anspruch 4 ist eine vorteilhafte Anordnung zur Durchführung des Verfahrens angegeben.

Der mit der Erfindung erzielte Vorteil besteht darin, daß der Mittelwert der Phase des übertragenen Digitalsignals weniger schwankt, wodurch der Jitter wesentlich verringert wird.

Die im unabhängigen Anspruch 4 angegebene Anordnung ist mit geringen Mehraufwand realisierbar.

Ausgestaltungen des Verfahrens und der Anordnung sind den Unteransprüchen zu entnehmen.

Ausführungsbeispiele der Erfindung werden im folgenden anhand von Figuren näher beschrieben:
- Figur 1: zeigt einen bekannten Verlauf der Phasenabweichung eines zu übertragenden Digitalsignals relativ zum Sollwert der Phase über viele Rahmen beim bekannten Positiv-Null-Negativ-Stopfen,
- Figur 2: zeigt einen Verlauf der Phasenabweichung eines zu übertragenden Digitalsignals relativ zum Sollwert der Phase normiert über einigen der Stopfentscheidungszeitpunkten beim erfindungsgemäßen Verfahren und
- Figur 3: zeigt einen Verlauf der Phasenabweichung mit anderen Entscheiderschwellen,
- Figur 4: zeigt einen Verlauf der Phasenabweichung des übertragenen Digitalsignals relativ zum Sollwert der Phase über der Rahmenzahl nach Figur 1 unter Verwendung des Verfahrens nach Figur 2.
- Figur 5: zeigt einen Pulsrahmen,
- Figur 6: zeigt eine Anordnung zur Durchführung des Verfahrens,
- Figur 7: zeigt ein Zeitdiagramm zur Adressensteuerung,
- Figur 8: zeigt ein Zeitdiagramm zur Feststellung des Phasenabstandes,
- Figur 9, 10: zeigen hierzu weitere Zeitdiagramme,
- Figur 11: zeigt das Prinzip einer Systemsteuerung und
- Figur 12: zeigt ein Empfangsteil.

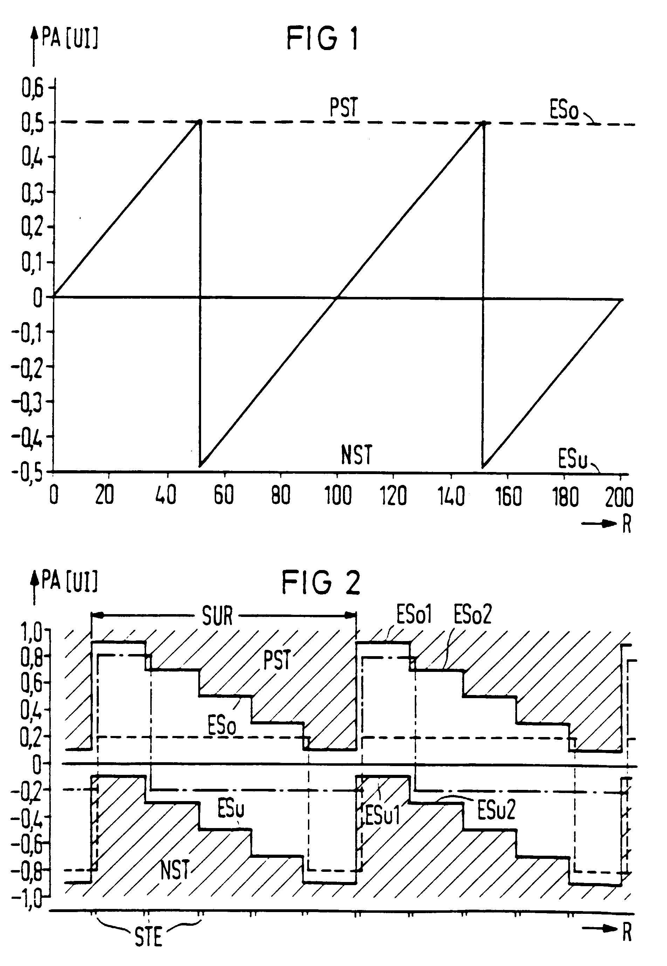

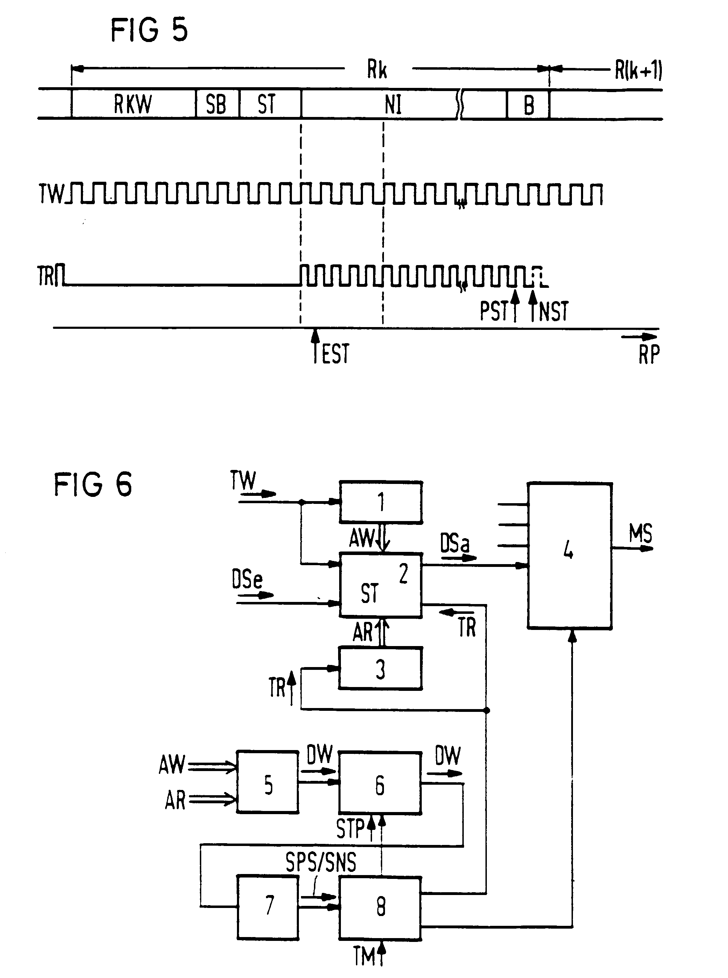

Figur 1 zeigt den Verlauf der Phasenabweichung PA in UI (Unit Interval) des sendeseitig abgehenden (übertragenen) Digitalsignals DSa - genauer dessen "Sollwert" der Phase - relativ zum sendeseitig ankommenden Digitalsignal DSe und die Anpassung des abgehenden Digitalsignals DSa an die Datenrate des ankommenden Signals durch Stopfvorgänge. Aus der in Fig. 6 dargestellten Anordnung ist zu entnehmen, daß das ankommende Digitalsignal DSe zunächst in einen Speicher 2 eingeschrieben wird. Aus diesem wird es als abgehendes Digitalsignal DSa ausgelesen und mit einer (in der Regel) geringfügig abweichenden Datenrate (entsprechend der Nominal-Übertragungskapazität des Datenkanals) übertragen.

Die Abweichungen gegenüber der Datenrate des ankommenden Digitalsignal werden durch Stopfen ausgeglichen. Es soll hier zunächst nicht darauf eingegangen werden, daß das abgehende Digitalsignal DSa durch einen Lückentakt abgerufen wird. Dies soll der Begriff "Sollwert der Phase" berücksichtigen. Hierzu ein Beispiel: Sind die Datenraten des ohne Stopfen übertragenen (abgehenden) und des ankommenden Digitalsignals gleich, dann ergibt sich in der Darstellung nach Fig. 1 kein Phasenabstand zwischen den Digitalsignalen. Ein schaltungsbedingter konstanter Phasenabstand bleibt unberücksichtigt. Es ist eine konstante obere Entscheidungsschwelle ESo bei + 0,5 UI und eine untere Entscheidungsschwelle ESu bei - 0,5 UI festgelegt.

Die Stopfrate wird im Beispiel mit 0,01 angenommen, d.h. jeweils nach hundert Pulsrahmen hat sich die Phasenabweichung PA um 1 UI geändert, so daß ein Stopfvorgang erfolgt.

Die Phasenabweichung PA nimmt folglich in diesem Beispiel - wenn die Datenrate des übertragenen Digitalsignals größer als die des ankommenden Signals ist - gleichmäßig um 0,01 UI pro Pulsrahmen zu. Nach Überschreiten der oberen Entscheidungsschwelle ESo bei + 0,5 UI wird positiv gestopft (PST), wodurch die Phasenabweichung PA um 1 UI auf einen Wert von etwa - 0,5 UI springt. Anschließend nimmt sie wieder gleichmäßig um 0,01 UI pro Pulsrahmen R zu. Nach 100 Pulsrahmen R wird die Entscheidungsschwelle + 0,5 UI wieder erreicht und ein weiterer Stopfvorgang PST ausgelöst. Dies ergibt einen langsamen Jitter (Phasenschwankungen), der von einem empfangsseitigen Phasentiefpaß, der durch die Phasenregelschleife (PLL) eines Desynchronizers gebildet wird, nur mangelhaft gedämpft werden kann.

Bei der bekannten Lösung hat der Phasenregelkreis - abhängig von der Abweichung von Datenrate und Ubertragungsrate - in großen Abständen einen vollen Phasensprung von einem UI zu verarbeiten.

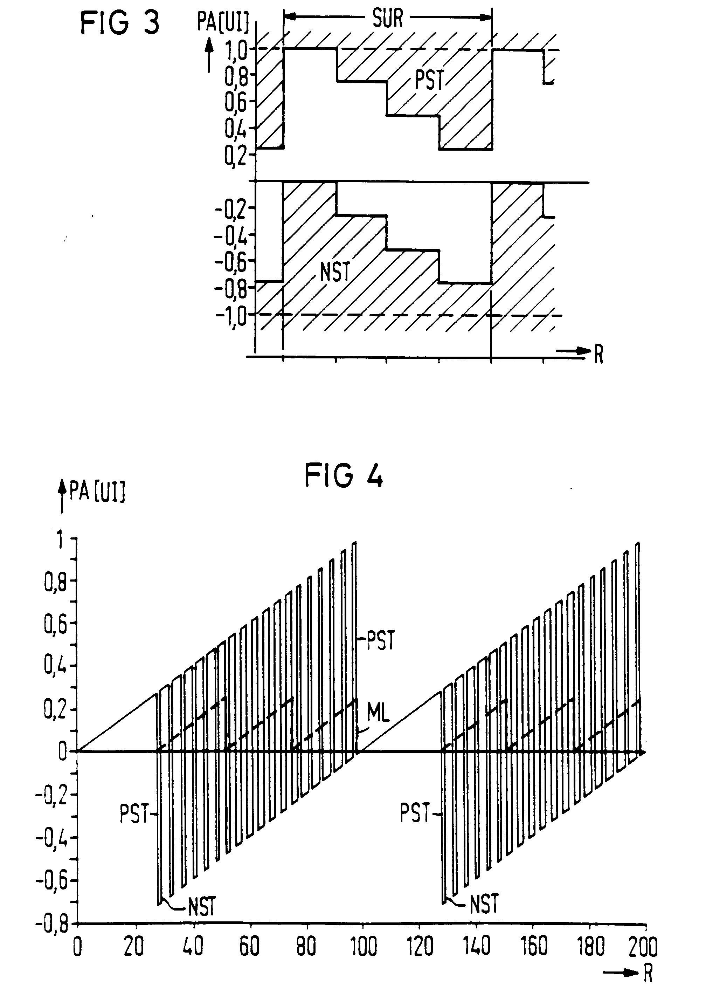

Bei der Erfindung werden häufiger Phasensprünge erzeugt, wie in Fig. 4 dargestellt, und die Tiefpaßwirkung des empfangsseitigen Phasenregelkreises wird genutzt. Es werden abwechselnd negative und positive Phasensprünge übertragen, d.h. es wird abwechselnd positiv und negativ gestopft. Diese paarweisen Stopfvorgänge PST und NST, die sendeseitig jedoch keinerlei resultierende Phasenkorrektur zwischen ankommenden und abgehenden Digitalsignal bewirken, werden fortgesetzt, bis eine bestimmte Phasenabweichung überschritten wird, die zu einem "echten" einzelnen Stopfvorgang führt. Der Abstand der "echten" Stopfvorgänge ist wie bisher von der Differenz zwischen der Bitrate des ankommenden Digitalsignals und der übertragungsbitrate des genutzten Datenkanals abhängig.

Spektralmäßig wirkt sich das Verfahren so aus, daß empfangsseitig das Spektrum der durch die Stopfvorgänge erzeugten Regelspannung höhere Frequenzen aufweist, die durch den Phasenregelkreis ausgefiltert werden, so daß Jitter weitgehend vermieden wird.

Anhand von Fig. 2 sollen die Grundlagen zum Auslösen der zusätzlichen paarweisen Stopfvorgänge erläutert werden. Diese Figur zeigt wieder einen Verlauf der Phasenabweichung PA eines abgehenden (übertragenen) Digitalsignals DSa relativ zum ankommenden Digitalsignal DSe normiert über den Stopfentscheidungszeitpunkten STE von aufeinanderfolgenden Pulsrahmen R dargestellt. Mit dicken Strichen sind die Entscheidungskennlinien für eine obere Entscheidungsschwelle ESo und eine untere Entscheidungsschwelle ESu dargestellt, deren beider Entscheidungsschwellwerte ESo1, ESo2, ... bzw. ESu1, ESu2,... sich treppenförmig in Stufen von 0,2 UI gleichsinnig verändern, wobei der Abstand zwischen beiden zeitlich zugehörigen Entscheidungsschwellen ESo und ESu stets 1 UI beträgt. Ein Stopfüberrahmen SUR umfaßt hier N = 5 Pulsrahmen, denen jeweils fünf unterschiedliche obere und untere Entscheidungsschwellwerte zugeordnet sind. Liegt ein Phasenabstand PA zu einem Zeitpunkt einer Stopfentscheidung STE über der oberen Entscheidungsschwelle ESo (oder erreicht diese zumindest), wird positiv gestopft; dies ist wieder mit PST bezeichnet.

Liegt der Phasenabstand PA dagegen unterhalb der unteren Entscheiderschwelle ESu, wird negativ gestopft, bezeichnet mit NST. Als Folge jedes Stopfvorgangs ändert sich der Phasenabstand PA um 1 UI.

Die durchgezogene dünne Linie zeigt einen optimalen Phasenabstand PA von 0, bei dem kein Stopfen erforderlich ist. Dies ist die Sollage der Phase. Die strichpunktierte und die gestrichelte Linie zeigen dagegen zwei Phasenlagen, bei denen jeweils paarweise gestopft wird. Der Mittelwert - gemittelt über die Periodendauer der treppenförmigen Entscheidungskennlinie, d.h. eines Stopfüberrahmens - beträgt jedoch stets etwa Null.

Aus Fig.2 wird ersichtlich, daß die Dauer zwischen den aufeinanderfolgenden Stopfvorgägen NST und PST (bzw. PST und NST) von der Phasenabweichung abhängig ist. Ist PA = 0 oder wird keine der Entscheidungsschwellen überschritten so erfolgen keine Stopfvorgänge.

Ist PA positiv und groß (strichpunktierte Linie) so folgt Negativ-Stopfen und Positiv-Stopfen in aufeinanderfolgenden Pulsrahmen R.

Ist PA negativ und groß (gestrichelte Linie) ist der Abstand zwischen Negativ-Stopfen und Positiv-Stopfen dagegen groß.

Bei mittleren Phasenabweichungen PA ergeben sich mittlere Abstände. Die gestrichelte und die strichpunktierte Linie verlaufen nur dann exakt waagerecht, wenn keine zeitbedingten Phasenveränderungen (z.B. entsprechend Fig. 1) vorkommen. Der Mittelwert der Phasenabweichung liegt stets etwa bei Null.

In Figur 3 ist eine Variante der Entscheidungskennlinien dargestellt, die dem in Figur 4 dargestellten Phasenverlauf zugrunde liegt. Die Entscheidungskennlinien weisen ungleiche Abstände zur Nullinie auf. Die maximale Entscheidungsschwelle ESo ist mit der Schwelle für das unpaarige positive Stopfen identisch, so daß bei positiven Phasenabweichungen nur drei zusätzliche Entscheidungsschwellen paarweises Stopfen auslösen. Bei einer gegenüber Figur 1 unveränderten Stopfrate von 0,01 wird die obere Entscheidungsschwelle ESo derart variiert, daß die Entscheidungsschwellenwerte in aufeinanderfolgenden N = 4 Rahmen R die Werte 1 UI, 0,75 UI, 0,5 UI und 0,25 UI annehmen, worauf die Entscheidungsschwelle wieder auf 1 UI springt. Die untere Entscheidungsschwelle ESu verläuft hierzu parallel mit um 1 UI tieferen Werten. Dies wiederholt sich nach der vier Rahmen R umfassenden Stopfüberrahmenperiode SUR.

Figur 4 zeigt einen Verlauf der Phasenabweichung des abgehenden Digitalsignals DSa Sollwerte der Phase) relativ zum ankommenden Digitalsignal DSe. Die Darstellung entspricht hier im Beispiel der überlagerung von Fig. 1 mit den gemäß Fig. 3 ausgelösten zusätzlichen Stopfvorgängen.

Die vorstehenden Zahlen wurden so gewählt, daß der erfindungsgemäße Effekt möglichst klar erkennbar wird. Nach 25 Rahmen R, wenn der Phasenabstand 0,25 UI erreicht, setzt positives und nachfolgendes negatives Stopfen paarweise derart ein, daß der Mittelwert der Phasenabweichung PA nach einem Stopfüberrahmen bei Null liegt. Er steigt dann entsprechend der realen Phasenabweichung an. In Fig. 4 wurde die Mittelwertlinie ML gestrichelt eingezeichnet. Durch eine veränderte Anordnung der Entscheidungsschwellen, kann auch eine symmetrisch zur Nullinie liegende Mittelwertlinie erzielt werden. Eine weitere Verringerung des Jitters wird hierdurch nicht erreicht.

Der Abstand zwischen positiven Stopfen PST und negativem Stopfen NST, der anfänglich nur einen Rahmen R beträgt, vergrößert sich mit zunehmenden Phasenabstand bei einer höheren Anzahl der Rahmen R. Entsprechend wird die Mittelwertlinie erneut mit einer Änderung der Abstände zwischen den Stopfvorgängen zur Nullinie nach 50 und 75 Rahmen verschoben. Etwa beim hundersten Rahmen, bei dem die Phasenabweichung PA kurzzeitig etwa 1 UI erreicht, entfällt nach einem positivem Stopfvorgang PST der zugehörige negative NST und der Phasenabstand sinkt auf null. Etwa beim 125-sten Pulsrahmen findet erneut ein weiterer positiver Stopfvorgang PST statt, der wieder unmittelbar von einem negativen Stopfvorgang NST gefolgt wird, und der beschriebene Vorgang wiederholt sich.

Der unterste Entscheidungsschwellwert, bis zu den keine Stopfvorgänge erfolgen, kann beliebig klein gewählt werden.

Aus der Fig. 4 wird auch klar, daß eine Treppenkurve mit mehreren Stufen (im Idealfall ein Sägezahn) zu geringeren Abweichungen von dem Sollwert PA = 0 des Phasenabstandes führt. Allerdings wird hierdurch die Häufigkeit der Stopfvorgänge entsprechend der Zunahme der Entscheidungsschwellen reduziert.

Bevor auf Einzelheiten der Anordnung eingegangen wird, soll die Wirkungsweise der Erfindung näher erläutert werden.

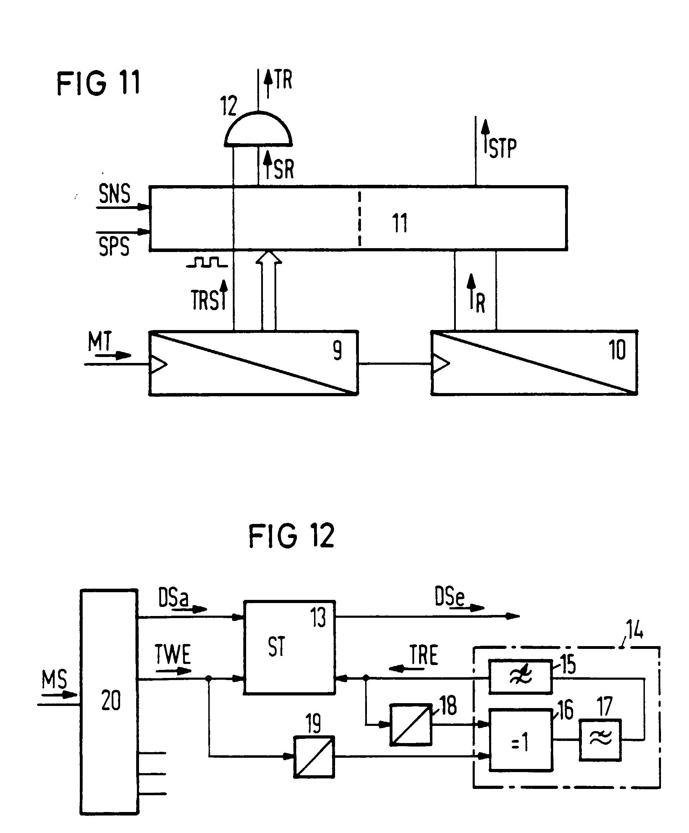

Ein Prinzipschaltbild des Empfangsteils ist in Fig. 12 dargestellt. Es beinhaltet einen Speicher 13 und einen Phasenregelkreis 14 mit einem spannungsgesteuerten Oszillator (VCO), einer Phasenvergleichsschaltung 16 und ein Tiefpaß 17. Der empfangsseitige Lesetakt TRE und Schreibtakt TWE ist jeweils über einen Frequenzteiler 18 bzw. 19 auf die Phasenvergleichsschaltung 16 geführt.

Durch den Phasenregelkreis werden die durch Stopfvorgänge unregelmäßige eintreffenden Datenbits des Digitalsignals in ein Digitalsignal DSe mit möglichst konstanter Datenrate umgesetzt, das weitestgehend dem ankommenden Digitalsignal DSe der Sendeseite entspricht. Bei Multiplexsystemen wird das empfangene Multiplexsignal MS zunächst durch einen Demultiplexer 20 in mehrere Digitalsignale aufgeteilt.

Auf der Empfangsseite entspricht der Phasenabstand des übertragenen Digitalsignals gegenüber dem Digitalsignal DSe bzw. einem empfangsseitigen Lesetakt TRE weitgehend dem Verlauf entsprechend Fig. 4. Für den empfangsseitigen Phasenregelkreis bedeuted die Ubertragung der Stopfvorgänge zeitlich betrachtet folgendes:
Die Stopfvorgänge bewirken jedesmal den Empfang eines Informationsbits weniger oder eines Informationsbits mehr und damit einen Taktimpuls des zugehörigen Schreibtaktes TWE mehr oder weniger und somit am Ausgang eines dem Phasenregelkreises vorgeschalteten Frequenzteilers jedesmal einen positiven oder negativen Phasensprung der Führungsgröße, das heißt der Regelspannung (Regelabweichung) für den Oszillator des Phasenregelkreises. Die zusätzlichen positiven und die negativen Stopfvorgänge liegen während einer Sägezahnperiode (Fig. 4) im Anfangs-, Mittel- und Endbereich für unterschiedliche Zeit an und bewirken, daß durch die Tiefpaßwirkung die mittlere Oszillatorfrequenz geringere Phasenschwankungen aufweist. Mit anderen Worten: Es erfolgt bereits eine Steuerung des Phasenregelkreises, bevor der "echte" Stopfvorgang eintritt.

Die Wirkungsweise des Verfahrens kann auch so erklärt werden, daß empfangsseitig aufgrund der häufig durchgeführten Stopfvorgänge die verursachten großen Phasenabstände durch die Tiefpaßwirkung des Phasenregelkreises eleminiert werden und aufgrund der unterschiedlichen Stopfabstände die mittlere Phasenabweichung (Pulsbreitenmodulation) weniger schwankt. Die Zeitkonstante T des Phasenregelkreises sollte größer als die Dauer eines Stopfüberrahmens sein.

In Figur 5 ist ein vereinfachter Pulsrahmen Rk dargestellt. Dieser enthält ein Rahmenkennungswort RKW, Servicebits SB, Nutzinformation NI, Stopfinformation ST und zwei Zeitschlitze B zur Übertragung von Stopf- oder Informationsbits. Durch die Stopfinformation ST wird angegeben, ob Stopf- oder Informationsbits in den Zeitschlitzen 13 übertragen werden sollen. Diese Bitpositionen sind mit PST und NST gekennzeichnet. Die Rahmenposition RP gibt die Zeitschlitze für jeweils ein Bit im Pulsrahmen an. Der Entscheidungszeitpunkt EST liegt hier zu Beginn der Aussendung der Nutzinformation. Es ist selbstverständlich auch möglich, mit mehreren Bits zu stopfen. Außerdem ist in Fig. 5 ein Schreibtakt TW und ein Lesetakt TR dargestellt, auf die später eingegangen wird.

In Multiplexsystemen werden mehrere Digitalsignale zu einem Multiplexsignal zusammengefaßt, das in einem Pulsrahmen/Pulsüberrahmen eingefügt übertragen wird. Als Pulsrahmen und Pulsüberrahmen dienen z.B. auch die in den CCITT-Empfehlungen nach G.709 angegebenen Strukturen. Ebenso können auch Digitalsignale in lediglich intern verwendete Pulsrahmen, z.B. in Vermittlungen oder Cross-Connectoren, eingefügt werden.

In Figur 6 ist eine sendeseitige Multiplexanordnung dargestellt. Sie besteht aus einem Speicher 2 dessen Adressen durch zwei Adreßzähler 1 und 3 ermittelt werden. In den Speicher 2 wird das Digitalsignal DSe eingeschrieben. Der Speicherausgang ist mit einer Multiplexeinrichtung 4 verbunden. Die Zählerausgänge liefern die Schreibadresse AW und die Leseadresse AR. Beide werden einer Subtraktionsschaltung 5 zugeführt, die an ihrem Ausgang einen Differenzwert DW abgibt, der im einem Latch 6 zwischengespeichert wird. Dessen Ausgang ist mit einem Schwellwertentscheider 7 verbunden, der beim Über- bzw. Unterschreiten der Entscheidungsschwellwerte Signale SPS und SNS für positives Stopfen bzw. negatives Stopfen einer Systemsteuerung 8 (Frame- Controll) zuführt.

Die Systemsteuerung arbeitet mit dem Multiplextakt TM. Ihre Aufgabe ist es, mehrere Digitalsignale DS zu einem Multiplexsignal MS zusammenzufassen, Zusatzinformationen wie Rahmenkennungswörter, Service-Bits usw. einzublenden und die Stopfvorgänge zu steuern. Diese Einrichtungen sind schaltungsmäßig jedem Fachmann auf dem Gebiet der Multiplextechnik bekannt. Das Digitalsignal DSe wird mit einem gleichmäßigen Schreibtakt TW in den Speicher 2 eingeschrieben. Das Auslesen erfolgt mit einem etwas schnelleren Lückentakt, dem Lesetakt TR, der jedoch dieselbe Anzahl von Impulsen je Pulsrahmen aufweist. Der Füllgrad des Speichers 2 steuert die Stopfvorgänge. Hierzu wird die Differenz zwischen der Schreibadresse AW und der Leseadresse AR gebildet. Überschreitet der Differenzwert DW einen oberen Schwellwert, den Differenzwert DWo, so erfolgt negatives Stopfen, indem ein weiteres Datenbit aus dem Speicher 2 ausgelesen wird und im Bereich B des Pulsrahmens eingefügt wird. Unterschreitet der Differenzwert den unteren Differenzwert DWu, so erfolgt positives Stopfen.

Diese Anordnung entspricht bisher der Wirkungsweise der bekannten Anordnung. Es wird vorsorglich darauf hingewiesen, daß der obere Differenzwert DWo der unteren Entscheidungsschwelle ESu nach Fig. 1 bis 4 entspricht und der untere Differenzwert DWu der Entscheidungsschwelle ESo entspricht.

In jedem Pulsrahmen ist zunächst in bekannter Weise ein Entscheidungszeitpunkt EST zur Ermittlung des Differenzwertes festgelegt. Zum Entscheidungszeitpunkt EST (Figur 5) wird der Differenzwert DW bewertet. Gegen Ende der Impulsfolge des Lesetaktes TR kann nun bei einem positiven Stopfvorgang ein Leseimpuls ausgeblendet werden oder bei einem negativen Stopfvorgang NST durch einen zusätzlicher Leseimpuls ein weiteres Informationsbit aus dem Speicher 2 abgerufen werden. Das Verfahren ist auch anwendbar, indem die mittlere Ubertragungsrate eines Bits, das ohne Phasenabweichungen beispielsweise in jedem zweiten Pulsrahmen eingefügt wird, geändert wird (Sollstopfrate 0,5).

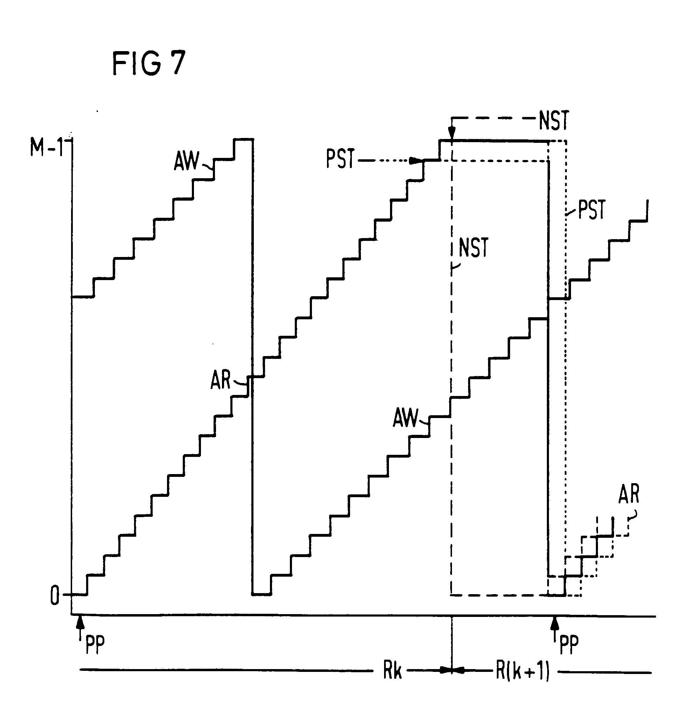

In Figur 7 ist ein Zeitdiagramm zur Veranschaulichung der Funktion zur Steuerung des Stopfvorganges angegeben. Entsprechend der Anzahl M der Informationsbits eines Pulsrahmens erfolgt die Adressierung des Speichers 2 über die Adreßzähler 1 und 3 jeweils mittels einer Modulo-M-Addition. Die Änderungen der Schreibadresse AW und der Leseadresse AR sind in Figur 7 dargestellt. Die Schreibadresse AW und die Leseadresse AR werden mit dem Schreibtakt TW bzw. Lesetakt TR jeweils um den Wert "1" erhöht, um beim Zählerstand M-1 auf 0 zurückzufallen. Während der Aussendung der Zusatzinformation wird keine Nutzinformation aus dem Speicher 2 abgerufen, d.h. die Leseadresse AR bleibt konstant. Stimmen die Taktfrequenzen des ankommenden Digitalsignals DSe und des abgehenden Digitalsignals DSa mit ihren Solltaktfrequenzen überein bzw. stimmen die Datenraten des abgehenden Digitalsignals (ohne Stopfen) und des ankommenden Digitalsignals überein, so wiederholt sich das in Figur 7 dargestellte Zeitdiagramm periodisch mit den folgenden Pulsrahmen R (k+1) usw. Weichen die Taktfrequenzen jedoch von den Sollfrequenzen ab, so ist positives oder negatives Stopfen erforderlich. Beim positiven Stopfen wird anstelle eines Informationsbits ein Leerbit in den Pulsrahmen (bzw. den Pulsüberrahmens) des abgehenden Digitalsignals DSa eingefügt, d.h. ein Leseimpuls wird unterdrückt, wodurch die Leseadresse AR zunächst konstant bleibt. Dies ist in Figur 7 durch die punktierte Linie dargestellt. Beim negativen Stopfen wird dagegen ein zusätzliches Informationsbit aus dem Speicher 2 ausgelesen und in den Pulsrahmen im Zeitschlitz B des abgehenden Digitalsignais eingefügt. Dies ist durch die gestrichelte Linie in Figur 7 dargestellt.

Ein Stopfvorgang wird zunächst immer dann ausgelöst, wenn die Differenz zwischen der Schreibadresse AW und der Leseadresse AR den oberen Differenzwert DWo überschreitet oder den unteren Differenzwert DWu unterschreitet. Wie bereits erwähnt, sollen nun bereits geringere Phasendifferenzen zwischen dem abgehenden und ankommenden Digitalsignal bzw. den Sollagen des Schreibtaktes und des Lesetaktes ermittelt werden, um zusätzlich paarweise Stopfvorgänge auslösen zu können. Eine Möglichkeit zur Ermittlung der Phasenabweichung liegt in der direkten Messung der Phasenabstände zwischen Schreibtakt und Lesetakt, wobei beim lückenhaft auftretenden Lesetakt dessen Sollagen berücksichtigt werden müssen.

Eine vorteilhafte Weiterbildung dieser Methode verwendet mehrere Prüfzeitpunkte PP1 bis PP4 entsprechend der Anzahl der Pulsrahmen R eines Stopfüberrahmens SUR anstelle eines einzigen Entscheidungszeitpunktes EST.

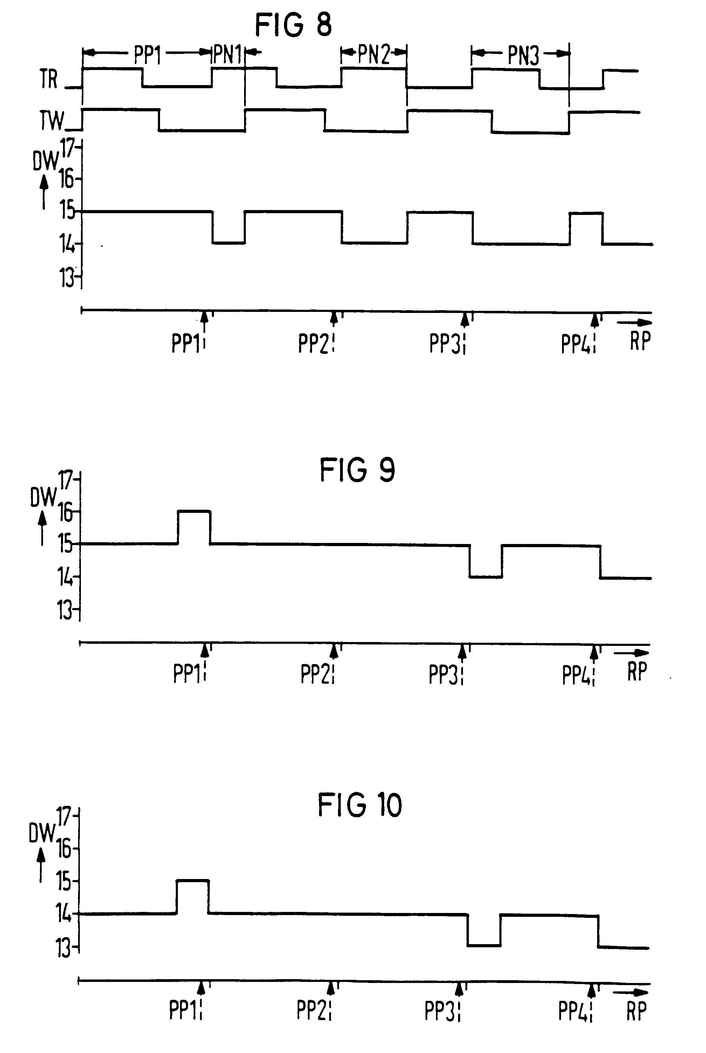

Aus Figur 5 ist ersichtlich, daß die Periodendauer des lückenhaften Lesetaktes TR kürzer ist als die des gleichmäßigen Schreibtaktes TW. Dies hat den in Figur 8 dargestellten Verlauf des Lesetaktes, des Schreibtaktes und des Differenzwertes DW - also der Differenz zwischen eingeschriebenen und ausgelesenen Bits, dem Füllgrad des Speichers - zur Folge. Stimmen der ebenfalls eingezeichnete Schreibtakt und der Lesetakt mit ihren Sollfrequenzen überein bzw. stimmen die Datenraten des abgehenden Digitalsignals (ohne Stopfen) und des ankommenden Digitalsignals überein, wiederholt sich das in Figur 8 dargestellte Zeitdiagramm ebenfalls periodisch mit jedem Pulsrahmen.

Diese Darstellung entspricht der Phasenabweichung PA = 0, bei dem die Phase des abgehenden Digitalsignals exakt ihrem "Sollwert" entspricht (Beschreibung zu Fig. 1). Erfolgt die Auswertung der Differenzwerte zu einem der Prüfzeitpunkte PP1 bis PP4, die den herkömmlichen Stopfentscheidungszeitpunkt STE ersetzen, so wird weder der obere Differenzwert DWo = 16 noch der untere Differenzwert DWu = 14 erreicht.

Anstelle von einem "Amplitudenschwellwert" ESo, ESu für die Phasenabweichung wird nun von folgendem ausgegangen: Die Phasendifferenz PN1 (Fig.8) zwischen den wirksamen Flanken des Lesetaktes TR und des Schreibtaktes TW zum ersten Prüfzeitpunkt PP1 entspricht bei der Sollage dem Unterschied in der Periodendauer des Schreibtaktes TW und des Lesetaktes TR. Die Phasendifferenz PN1 wird bewertet, wenn sich die Phase des Schreibtaktes TW gegenüber der des Lesetaktes TR nach vorn verschiebt. Für den folgenden Prüfzeitpunkt PP2 ergibt sich die doppelte Phasendifferenz PN2. usw. Durch geeignete Wahl des Prüfzeitpunktes kann also ein Vielfaches dieser Phasendifferenz PN1 ermittelt werden. Bei Phasenverschiebungen in entgegengesetzter Richtung gelten die Phasendifferenzen zwischen der wirksamen Flanke des Lesetaktes und der vorangehenden wirksamen Flanke des Schreibtaktes. In Fig. 8 ist hiervon nur die Phasendifferenz PP1 eingezeichnet ist.

Die Phasendifferenzen PN und PP weichen - wenn Schreib- und Lesetakt von ihren Sollfrequenzen abweichen - entsprechend dem Phasenabstand PA von ihren in Fig. 8 dargestellten "Soll-Phasendifferenzen" ab.

Ein Abweichen, das zu Verschiebungen der Takte führt, die größer als die in Fig. 8 dargestellten Phasendifferenzen sind, wird entsprechend einem Überschreiten einer Entscheidungsschwelle bewertet und bewirkt einen Stopfvorgang. Die Phasendifferenz PN1 entspricht der Stufenhöhe der dargestellten Entscheidungskennlinien. Die Ermittlung der Phasendifferenz und damit des PHasenabstandes erfolgt über den Füllgrad des Speichers.

In Fig. 9 ist nun im Gegensatz zu den in Fig. 1 bis Fig. 4 dargestellten Beispielen angenommen worden, daß die Phase des Schreibtaktes relativ zum Lesetakt zeitlich nach vorne (in der Zeichnung nach links) wandert. Der Schreibtakt weist damit relativ zum Lesetakt (bzw. dem Sollwert) eine höhere Frequenz auf.

Als Folge der Phasenverschiebung findet zwischen den Takten ein Wechsel in der Folge zwischen der Änderung von Leseadresse und Schreibadresse zum Zeitpunkt der Prüfzeitpunkt PP1 statt, d.h. der Schreibtakt hat den Lesetakt "überholt". Der Differenzwert erreicht zum Prüfzeitpunkt PP1 den oberen Differenzwert DWo = 16 und löst somit einen Stopfvorgang aus. Da hier der obere Differenzwert (das ankommende Digitalsignal weist eine höhere Datenrate als das abgehende Digitalsignal auf) erreicht ist, wird negativ gestopft. Am Ende des Pulsrahmens wird hierdurch der Differenzwert um 1 ermäßigt. Für den folgenden Pulsrahmen gilt Figur 10. Die Stopfentscheidung erfolgt nunmehr einen Pulsrahmen R und zusätzlich eine Periode des Lesetaktes später zum nächsten Prüfzeitpunkt PP2. Dort ist der Differenzwert DW = 14, der untere Differenzwert DWu = 14 ist erreicht, und es wird positiv gestopft. Der Prüfzeitpunkt wird von Pulsrahmen zu Pulsrahmen entsprechend der Anzahl der Pulsrahmenperioden eines Stopfüberrahmens geändert, bis wieder mit dem ersten Prüfzeitpunkt PP1 der hier unmittelbar aufeinanderfolgenden Prüfzeitpunkte begonnen wird. Auf weitere Zeitdiagramme zu den folgenden Stopfvorgängen wird hier verzichtet.

Bei diesem Vorgehen wird also nicht mehr zu einem bestimmten Prüfzeitpunkt der Unterschied zwischen Schreibtakt und Lesetakt gemessen, statt dessen erfolgt zu verschiedenen Prüfzeitpunkten die Feststellung, ob sich die Reihenfolge der Änderung von Schreibadresse und Leseadresse verschoben hat. Hierzu reicht eine Bewertung des Differenzwertes zu den Prüfzeitpunkten aus.

eine Änderung des Differenzwertes DW, die einen Stopfvorgang auslöst. Die Prüfzeitpunkte können innerhalb des Pulsrahmens entsprechend den gewünschten Unterschieden zwischen den Entscheidungsschwellen festgelegten werden. Im vorgegebenen Beispiel entsprechen vier Perioden des Schreibtaktes fünf Perioden des Lesetaktes. Der Wechsel zwischen Schreib- und Leseadresse zum Prüfzeitpunkt PP1 entspricht der Phasenverschiebung um 1/4-Periode des Lesetaktes bzw. 1/5-Periode des Schreibtaktes innerhalb eines Pulsrahmens.

In Figur 11 ist die Systemsteuerung 8 detailliert dargestellt. Sie enthält einen Rahmengenerator 9, der über seinen Rahmenzähler den Pulsrahmen festlegt. Der Rahmenzähler steuert einen Rahmennummernzähler 10, der die Anzahl der Pulsrahmen je Stopfüberrahmen festlegt und außerdem die Entscheidungsschwellen entsprechend des aktuellen Rahmens R eins Stopfüberrahmens zur Auslösung von Stopfvorgängen - also die Entscheidungskennlinie - bestimmt. Die Ausgänge des Rahmengenerators 9 und des Rahmennummernzählers 10 sind mit einer Steuerlogikschaltung 11 verbunden, der Steuersignale SNS und SPS von dem Schwellwertentscheider 7 zugeführt werden. In der Steuerlogikschaltung werden bestimmte Zeitbedingungen ermittelt und auch die Steuersignale mit Zeitbedingungen durch eine kombinatorische Logikschaltung miteinander verknüpft. Ausgegeben wird ein Steuersignal STP zur Bestimmung der Prüfzeitpunkte PP1 bis PP4, indem ein Taktimpuls zum entsprechenden Zeitpunkt jedes Pulsrahmens abgegeben wird. Außerdem wird ein weiters Lesen-Steuersignal SR erzeugt, daß über ein logisches Gatter 12 aus einem Lesetaktsignal TRS den lückenhaften Lesetakt TR erzeugt und - gesteuert durch die Stopfsignale SNS und SPS - bei Stopfvorgängen einzelne Impulse des Lesetaktes hinzufügt oder ausblendet.

### Bezugszeichenliste

- 2: Speicher
- 1, 3: Adreßzähler
- 4: Multiplexeinrichtung
- W: Schreibadresse
- R: Leseadresse
- 5: Subtraktionsschaltung
- DW: Differenzwert
- 6: Latch
- 7: Schwellwertentscheider
- NST: negatives Stopfen
- PST: positives Stopfen
- ML: Mittelwertlinie
- 8: Rahmen-Steuerung
- TM: Multiplextakt
- TW: Schreibtakt
- TR: Lesetakt
- 8: Systemsteuerung
- DSe: ankommendes Digitalsignal
- DSa: abgebendes Digitalsignal
- AW: Schreibadresse
- AR: Leseadresse
- STE: Stopfentscheidungszeitpunkt
- R: Pulsrahmen
- 9: Rahmengenerator
- 10: Rahmennummernzähler
- 11: Steuerlogikschaltung
- SNS: Steuersignal für NS
- SPS: Steuersignal für PS
- 12: logisches Gatter
- STP: Steuersignal Prüfposition
- SR: Lesen-Steuersignal
- TRS: Lesetaktsignal
- ESo: obere Entscheidungsschwelle
- SSu: untere Entscheidungsschwelle
- MS: Multiplexsignal
- PN, PP: Phasendifferenz
- ESo1, ESu1, ....: Schwellwerte
- PP1, PP2 ....: Prüfposition
- SUR: Stopfüberrahmen
- 13: Speicher
- 14: Phasenregelkreis
- 15: Oszillator
- 16: Phasenvergleichsschaltung
- 17: Tiefpaß
- 18: Frequenzteiler
- 19: "
- 20: Demultiplexer

## Patentansprüche

1. Verfahren zur Übertragung mindestens eines ankommenden Digitalsignals (DSe) in einem Datenkanal mit konstanter Taktrate, bei dem die Anpassung der Datenrate des Digitalsignals (DSe) an die Datenrate des Datenkanals durch Stopfen erfolgt, indem bei Erreichen einer oberen treppenförmig verlaufenden Entscheidungsschwelle (ESo) und einer unteren hierzu parallel verlaufenden Entscheidungsschwelle (ESu) des Phasenabstandes (PA) über die notwendigen Stopfvorgänge hinaus zusätzlich paarweise Stopfvorgänge durchgeführt werden, so daß auf einen zusätzlichen positiven Stopfvorgang (PST) ein negativer (NST) folgt oder umgekehrt und die zeitlichen Abstände zwischen jeweils einem positiven Stopfvorgang (PST) und einem negativen Stopfvorgang (NST) gegenüber den Abständen jeweils zwischen dem negativen (NST) und dem folgenden positiven Stopfvorgang (PST) abhängig von dem Phasenabstand (PA) derart variiert werden, daß der Mittelwert des Phasenabstandes (PA) des abgehenden Digitalsignals (DSa) zum ankommenden Digital (DSe), gebildet zwischen aufeinanderfolgenden gleich gerichteten Stopfvorgängen (PST, PST oder NST, NST), annähernd konstant ist, wobei der Mittelwert des Phasenabstandes (PA) zwischen dem abgehenden Digitalsignal (DSa) und dem ankommenden Digitalsignal (DSe) durch die zusätzlichen Stopfvorgänge annähernd dem Sollwert des Phasenabstandes von Null (PA = 0) entspricht, und
ein zwischen zwei in konstanten Zeitabständen erfolgenden gleich gerichteten Stopfvorgängen (PST, PST oder NST, NST) festgelegter Stopfüberrahmen (SUR) eine konstante Anzahl von Pulsrahmen (R) aufweist,
**dadurch gekennzeichnet**,
daß als Entscheidungsschwellen (ESo, ESu) Differenzwerte (DW, DWu, DWo), die den Füllgrad eines Pufferspeichers (2) angeben, zur Auslösung zusätzlicher paarweiser Stopfvorgänge bewertet werden und daß die Differenzwerte (DW) zu unterschiedlichen Prüfzeitpunkten (PP1 bis PP4) bewertet werden, von denen jeweils einer (PP1 bis PP4) einem der Pulsrahmen (R) eines Stopfüberrahmens (SUR) zugeordnet ist.

2. Verfahren nach Patentanspruch 1,
**dadurch gekennzeichnet**,
daß die Anpassung der Datenraten durch Positiv-Null-Negativ-Stopfen (PST, NST) erfolgt,
daß eine obere treppenförmig verlaufende Entscheidungsschwelle (ESo) zur Auslösung des einen Stopfvorganges (PST) in einem Stopfüberrahmen (SUR) treppenförmig von einem Maximalwert kleiner oder gleich einem Unit Interfall (≤ 1 UI) auf einen Minimalwert von ≥ Null verringert wird und dann zu Beginn des nächsten Stopfüberrahmens wieder auf den Maximalwert gesetzt wird,
daß eine untere Entscheidungsschwelle (ESu) zur Auslösung des anderen Stopfvorganges (NST) im Abstand von einem Unit Intervall gleichsinnig verläuft und der Maximalwert der unteren Entscheidungsschwelle (ESu) kleiner ist als der Minimalwert der oberen Entscheidungsschwelle (ESo) und
daß der Stopfüberrahmen (SUR) und die treppenförmig verlaufenden Entscheidungsschwellen (ESo, ESu) so gewählt werden, daß sich während einer Periodendauer des Stopfüberrahmens (SUR) die Phase des abgehenden Digitalsignals (DSa) relativ zum ankommenden Digitalsignal (DSe) um weniger als die Differenz zwischen zwei benachbarten Entscheidungsschwellwerten (ESO1, ES02) ändert.

3. Verfahren nach einem der vorhergehenden Ansprüche,
**dadurch gekennzeichnet**,
daß sendeseitig mehrere abgehende Digitalsignale (DSa) zu einem Multiplexsignal (MS) zusammengefaßt werden und daß empfangsseitig das Multiplexsignal (MS) in die einzelnen Digitalsignale (DS) aufgeteilt wird, die mit einem in einem Phasenregelkreis gewonnenen empfangsseitigen Lesetakt (TRE) ausgelesen werden.

4. Anordnung zur Übertragung mindestens eines ankommenden Digitalsignals (DSe) über einen Dantenkanal mit konstanter Taktrate, bei dem die Anpassung der Datenraten durch Positiv-Null-Negativ-Stopfen erfolgt, indem bei Erreichen eines vorgegebenen oberen oder unteren Phasenabstandes (PA) Stopfvorgänge über die notwendigen Stopfvorgänge hinaus zusätzliche Stopfvorgänge erzeugt werden,
mit einem Speicher (2), in den das ankommende Digitalsignal (DSe) mit einem Schreibtakt (TW) eingeschrieben und aus dem mit einem Lesetakt (TR) ausgelesen wird,
mit einer Systemsteuerung (8) zur Steuerung des abgehenden Digitalsignals und der Stopfvorgänge (NST, PST) und mit einem Schwellwertentscheider (7), der beim Überschreiten einer oberen treppenförmigen Entscheidungsschwelle (ESo) oder unterschreiten einer unteren Entscheidungsschwelle (ESo), einen Stopfvorgang (NST, PST) auslöst,
**dadurch gekennzeichnet**,
daß der Schwellwertentscheider (7) eine treppenförmig verlaufende sich mit jedem von N Pulsrahmen (R) eines Stopfüberrahmens (SUR) verändernde obere Entscheidungsschwelle (ESo) für den Phasenabstand (PA) ≤ als ein Unit Intervall (≤ 1 UI) und ≥ 0 und eine hierzu gleichförmig im Abstand eines Unit Zeitintervalls verlaufende untere Entscheidungsschwelle (ESu≤0,≥-1 UI) aufweist,
daß Phasenabweichungen kleiner als ein Unit Intervall (<1 UI) ermittelt werden, die beim Über- oder Unterschreiten einer Entscheidungsschwelle einen Stopfvorgang (PST, NST) auslösen, daß die Systemsteuerung (8) einen Rahmengenerator (9) aufweist, der den Pulsrahmen (R) bildet und einen Rahmennummernzähler (0) steuert,
daß als Schwellwertentscheider (7) eine Steuerlogikschaltung (11) vorgesehen ist, der vom Rahmengenerator (9) und vom Rahmennummernzähler (10) Zeitkriterien übergeben werden, und
daß die Steuerlogikschaltung (11) ein Steuersignal (STP) erzeugt, das einem jedem Pulsrahmen (R) eines Stopfüberrahmens (SUR) zugeordneten Impuls zu unterschiedlichen Prüfzeitpunkten (PP1 bis PP4) entspricht, der einen Differenzwert (DW), der den Füllgrad des Speichers (2) angibt, abspeichert.

## Claims

1. Method for transmitting at least one incoming digital signal (DSe) in a data channel having a constant clock rate, in the case of which the data rate of the digital signal (DSe) is matched to the data rate of the data channel by buffering in that, on reaching an upper decision threshold (ESo), which runs in a stepped manner, and a lower decision threshold (ESu), which runs parallel thereto, of the phase separation (PA), buffering processes in addition to the required buffering processes are additionally carried out in pairs such that an additional positive buffering process (PST) is followed by a negative buffering process (NST), or vice versa, and the time intervals in each case between a positive buffering process (PST) and a negative buffering process (NST) are varied with respect to the intervals in each case between the negative (NST) and the subsequent positive buffering process (PST), as a function of the phase separation (PA), in such a manner that the mean value of the phase separation (PA) between the outgoing digital signal (DSa) and the incoming digital signal (DSe), formed between successive buffering processes (PST, PST or NST, NST) in the same direction, is approximately constant, the mean value of the phase separation (PA) between the outgoing digital signal (DSa) and the incoming digital signal (DSe) corresponding approximately to the desired value of the phase separation from zero (PA = 0), as a result of the additional buffering processes, and a buffer superframe (SUR), which is defined between two buffering processes (PST, PST or NST, NST) in the same direction and taking place at constant time intervals, has a constant number of pulse frames (R), characterized in that difference values (DW, DWu, DWo) which indicate the occupancy level of a buffer memory (2) are evaluated as decision thresholds (ESo, ESu) for initiating additional buffering processes in pairs, and in that the difference values (DW) are evaluated at different testing times (PP1 to PP4), of which in each case one (PP1 to PP4) is allocated to one of the pulse frames (R) of a buffer superframe (SUR).

2. Method according to Patent Claim 1, characterized in that the data rates are matched by positive-zero-negative buffering (PST, NST), in that an upper decision threshold (ESo), which runs in a stepped manner, is reduced, in order to initiate the one buffering process (PST) in a buffer superframe (SUR), in a stepped manner from a maximum value which is less than or equal to one unit interval (≤ 1 UI) to a minimum value of ≥ zero, and is then set to the maximum value again at the start of the next buffer superframe, in that a lower decision threshold (ESu) runs in the same direction, at an interval of one unit interval, in order to initiate the other buffering process (NST), and the maximum value of the lower decision threshold (ESu) is less than the minimum value of the upper decision threshold (ESo), and in that the buffer superframe (SUR) and the decision thresholds (ESo, ESu), which run in a stepped manner, are selected in such a manner that, during one period duration of the buffer superframe (SUR), the phase of the outgoing digital signal (DSa) changes with respect to the incoming digital signal (DSe) by less than the difference between two adjacent decision threshold values (ESo1, ESo2).

3. Method according to one of the preceding claims, characterized in that, at the transmission end, a plurality of outgoing digital signals (DSa) is combined to form a multiplex signal (MS), and in that, at the receiving end, the multiplex signal (MS) is split into the individual digital signals (DS) which are read out using a read clock (TRE) at the receiving end, which is obtained in a phase-locked loop.

4. Arrangement for transmitting at least one incoming digital signal (DSe) via a data channel having a constant clock rate, in the case of which the data rates are matched by positive-zero-negative buffering in that, on reaching a predetermined upper or lower phase separation (PA), additional buffering processes are produced, beyond the required buffering processes, having a memory (2) into which the incoming digital signal (DSe) is written using a write clock (TW) and from which reading out takes place using a read clock (TR), having a system controller (8) for controlling the outgoing digital signal and the buffering processes (NST, PST), and having a threshold value decision device (7) which initiates a buffering process (NST, PST) in the event of an upper stepped decision threshold (ESo) being exceeded or a lower decision threshold (ESu) being undershot, characterized in that the threshold value decision device (7) has an upper decision threshold (ESo), which runs in a stepped manner and changes with each of N pulse frames (R) of a buffer superframe (SUR), for the phase separation (PA) ≤ one unit interval (≤ 1 UI) and ≥ 0 and has a lower decision threshold (ESu ≤ 0, ≥ -1 UI), which runs in an identical shape thereto with a separation of one unit time interval, in that phase deviations of less than one unit interval (< 1 UI) are determined which initiate a buffering process (PST, NST) when a decision threshold is exceeded or undershot, in that the system controller (8) has a frame generator (9) which forms the pulse frame (R) and controls a frame number counter (O), in that a control logic circuit (11) is provided as the threshold value decision device (7), to which control logic circuit time criteria are passed from the frame generator (9) and from the frame number counter (10), and in that the control logic circuit (11) produces a control signal (STP) which corresponds to a pulse, which is allocated to each pulse frame (R) of a buffer superframe (SUR), at different testing times (PP1 to PP4), which pulse stores a difference value (DW) which indicates the occupancy level of the memory (2).

## Revendications

1. Procédé de transmission d'au moins un signal numérique (DSe) arrivant, dans une voie de données, à fréquence de rythme constante, dans lequel on effectue l'adaptation du débit de données du signal numérique (DSe) au débit de données de la voie de données par justification, par le fait que l'on effectue des opérations de justification par paire supplémentaire en dehors des opérations de justification nécessaires lorsqu'un seuil (ESo) de décision supérieur en escalier et un seuil (ESu) de décision inférieur, se déroulant en parallèle avec celui-ci, de l'intervalle (PA) de phase sont atteints, de sorte qu'il succède à une opération (PST) positive supplémentaire de justification une opération négative (NST) de justification et inversement et que l'on fasse varier les intervalles de temps entre une opération positive (PST) de justification et une opération négative (NST) de justification par rapport aux intervalles entre l'opération négative (NST) de justification et l'opération (PST) positive suivante de justification en fonction de l'intervalle (PA) de phase, de telle sorte que la valeur moyenne de l'intervalle (PA) de phase du signal (DSa) numérique de départ par rapport au signal numérique arrivant (DSe), formée entre des opérations de justification (PST, PST ou NST, NST) successives de même sens soit à peu près constante, la valeur moyenne de l'intervalle (PA) de phase entre le signal (DSa) numérique de départ et le signal (DSe) numérique arrivant correspondant, du fait des opérations supplémentaires de justification, à peu près à la valeur de consigne de l'intervalle de phase de zéro (PA=0), et une supertrame (SUR) de justification fixée entre deux opérations (PST, PST ou NST, NST) de justification de même sens s'effectuant pendant des intervalles de temps constants comporte un nombre constant de trames (R) d'impulsions,
caractérisé en ce que
on exploite, comme seuils (ESo, ESu) de décision, des valeurs (DW, DWu, DWo) de différence, qui indiquent le degré de remplissage d'une mémoire (2) tampon, pour le déclenchement d'opérations de justification supplémentaires par paire et
on exploite les valeurs (DW) de différence à des instants (PP1 à PP4) de vérification différents, dont l'un (PP1 à PP4) est associé à l'une des trames (R) d'impulsions d'une supertrame (SUR) de justification.

2. Procédé suivant la revendication 1,
caractérisé en ce que
on effectue l'adaptation des débits de données par justification positive-nulle-négative (PST, NST),
on diminue un seuil supérieur (ESo) de décision en escalier, pour déclencher l'une des opérations (PST) de justification dans une supertrame (SUR) de justification, en escalier d'une valeur maximum inférieure ou égale à un intervalle unité (≤ 1 UI) à une valeur minimale ≥ zéro et on le remet à la valeur maximum au début de la supertrame de justification suivante,
un seuil inférieur (ESu) de décision se déroule dans le même sens dans l'espace d'un intervalle unité, pour le déclenchement de l'autre opération (NST) de justification et la valeur maximum du seuil (ESu) inférieur de décision est plus petite que la valeur minimum du seuil (ESo) supérieur de décision et
on choisit la supertrame (SUR) de justification et les seuils (ESo, ESu) de décision en escalier de telle sorte que pendant la durée d'une.période de la supertrame (SUR) de justification, la phase du signal numérique (DSa) de départ change par rapport au signal (DSe) numérique arrivant, de moins de la différence entre deux valeurs (ESO1, ES02) de seuil de décision voisines.

3. Procédé suivant l'une des revendications précédentes,
caractérisé en ce que
on rassemble, côté émission, plusieurs signaux (DSa) numériques de départ en un signal (MS) multiplexé, et on subdivise, côté réception, le signal multiplexé (MS) en les divers signaux (DS) numériques, que l'on extrait à une cadence (TRE) de lecture côté réception obtenue dans une boucle à verrouillage de phase.

4. Dispositif de transmission d'au moins un signal (DSe) numérique arrivant, par l'intermédiaire d'une voie de données, à fréquence de rythme constante, dans lequel l'adaptation des débits de données s'effectue par justification positive-nulle-négative, par le fait que des opérations supplémentaires de justification sont produites en dehors des opérations nécessaires de justification lorsqu'un intervalle (PA) de phase supérieur ou inférieur prescrit est atteint,
comportant une mémoire (2), dans laquelle le signal numérique (DSe) arrivant est écrit à une cadence (TW) d'écriture et de laquelle il est lu à une cadence (TR) de lecture,
une commande (8) de système destinée à la commande du signal numérique de départ et des opérations (NST, PST) de justification,
et un dispositif (7) de décision à valeur de seuil, qui déclenche une opération (NST, PST) de justification lorsqu'on passe au-dessus d'un seuil (ESo) de décision supérieur en escalier ou que l'on passe en-dessous d'un seuil inférieur (ESo) de décision,
caractérisé en ce que
le dispositif (7) de décision à valeur de seuil a un seuil (ESo) supérieur de décision en escalier et changeant à chacune des N trames (R) d'impulsions d'une supertrame (SUR) de justification, pour l'intervalle (PA) de phase ≤ un intervalle d'unité (≤ 1 UI) et ≥ 0 et un seuil (Esu≤o, ≥-1 UI) inférieur de décision de même forme et se déroulant dans l'espace d'un intervalle de temps unité,
des écarts de phase plus petits qu'un intervalle unité (< 1 UI), qui déclenchent une opération (PST, NST) de justification lorsqu'on passe au-dessus ou au-dessous d'un seuil de décision, sont déterminés,
la commande (8) de système comporte un générateur (9) de trames, qui forme la trame (R) d'impulsions et un compteur (O) de numéros de trames,
il est prévu, comme dispositif (7) de décision à valeur de seuil, un circuit logique (11) de commande, auquel sont transférés par le générateur (9) de trames et par le compteur (10) de numéros de trames, des critères temporels, et
le circuit logique (11) de commande produit un signal (STP) de commande, qui correspond, à des instants (PP1 à PP4) de vérification différents, à une impulsion associée à chaque trame (R) d'impulsions d'une supertrame (SUR) de justification, laquelle impulsion mémorise une valeur (DW) de différence indiquant le degré de remplissage de la mémoire (2).
